(19) Europäisches Patentamt
European Patent Office
Office européen des brevets

(11) **EP 3 995 515 A1**

(12) **EUROPEAN PATENT APPLICATION**
published in accordance with Art. 153(4) EPC

(43) Date of publication:
**11.05.2022 Bulletin 2022/19**

(21) Application number: **20836017.2**

(22) Date of filing: **01.07.2020**

(51) International Patent Classification (IPC):
**C08F 2/38** (2006.01)

(52) Cooperative Patent Classification (CPC):
**C08F 2/38**

(86) International application number:
**PCT/JP2020/025841**

(87) International publication number:
**WO 2021/006148 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.07.2019 JP 2019126349**

(71) Applicant: **SUMITOMO SEIKA Chemicals Co., Ltd.
Kako-gun, Hyogo 675-0145 (JP)**

(72) Inventor: **KAWAHARA, Toru
Himeji-shi, Hyogo 672-8076 (JP)**

(74) Representative: **Vossius & Partner
Patentanwälte Rechtsanwälte mbB
Siebertstraße 3
81675 München (DE)**

(54) **CROSSLINKED POLYMER GEL, METHOD FOR PRODUCING SAME, MONOMER COMPOSITION, AND METHOD FOR PRODUCING CROSSLINKED POLYMER PARTICLE**

(57) A method for producing a crosslinking polymer gel, the method including polymerizing a monomer composition containing at least one (meth)acrylic acid compound selected from the group consisting of (meth)acrylic acid and a salt thereof and benzaldehyde to obtain a crosslinking polymer gel, in which a centrifuge retention capacity of crosslinking polymer particles obtained by coarsely crushing, drying, and pulverizing the crosslinking polymer gel is 60 g/g or more. A monomer composition for obtaining a crosslinking polymer gel, the monomer composition containing at least one (meth)acrylic acid compound selected from the group consisting of (meth)acrylic acid and a salt thereof, and benzaldehyde, in which a centrifuge retention capacity of crosslinking polymer particles obtained by coarsely crushing, drying, and pulverizing the crosslinking polymer gel is 60 g/g or more.

**Description**

**Technical Field**

The present invention relates to a crosslinking polymer gel and a method for producing the same, a monomer composition, and a method for producing crosslinking polymer particles.

**Background Art**

In the related art, an absorber containing a water-absorbent resin has been used in an absorbent article for absorbing a liquid (for example, urine) having water as a main component (for example, refer to Patent Literature 1 described below). For example, a water-absorbent resin can be obtained by using crosslinking polymer particles obtained by polymerizing at least one (meth)acrylic acid compound selected from the group consisting of (meth)acrylic acid and a salt thereof to obtain a crosslinking polymer gel, and thereafter coarsely crushing, drying, and pulverizing the crosslinking polymer gel.

**Citation List**

**Patent Literature**

[Patent Literature 1] Japanese Unexamined Patent Publication No. H06-345819

**Summary of Invention**

**Technical Problem**

In a case where a liquid having water as a main component is provided to an absorbent article, when the liquid is not sufficiently absorbed by an absorber of the absorbent article, there may be a problem of the excess liquid flowing on a surface of the absorbent article, resulting in its leakage to the outside of the absorbent article. Therefore, the water-absorbent resin constituting the absorber is required to have a better water retention amount. In addition, by using the crosslinking polymer particles having a better water retention amount, a water-absorbent resin having a better water retention amount is easily obtained, and a centrifuge retention capacity of the crosslinking polymer particles is preferably 60 g/g or more, for example.

When the crosslinking polymer gel for obtaining the crosslinking polymer particles having such a centrifuge retention capacity is subjected to a processing treatment such as coarse crushing, it is preferable to avoid occurrence of problems in a processing apparatus. For example, as an index of ease of processing of the crosslinking polymer gel, it is preferable that the crosslinking polymer gel is easily cut when the gel is cut.

An object of one aspect of the present invention is to provide a method for producing a crosslinking polymer gel that can be easily cut. An object of another aspect of the present invention is to provide a crosslinking polymer gel that can be easily cut. An object of still another aspect of the present invention is to provide a monomer composition capable of obtaining a crosslinking polymer gel that can be easily cut. An object of still another aspect of the present invention is to provide a method for producing crosslinking polymer particles using the above-mentioned crosslinking polymer gel.

**Solution to Problem**

One aspect of the present invention provides a method for producing a crosslinking polymer gel, the method including polymerizing a monomer composition containing at least one (meth)acrylic acid compound selected from the group consisting of (meth)acrylic acid and a salt thereof and benzaldehyde to obtain a crosslinking polymer gel, in which a centrifuge retention capacity of crosslinking polymer particles obtained by coarsely crushing, drying, and pulverizing the crosslinking polymer gel is 60 g/g or more.

Another aspect of the present invention provides a monomer composition for obtaining a crosslinking polymer gel, the monomer composition containing at least one (meth)acrylic acid compound selected from the group consisting of (meth)acrylic acid and a salt thereof, and benzaldehyde, in which a centrifuge retention capacity of crosslinking polymer particles obtained by coarsely crushing, drying, and pulverizing the crosslinking polymer gel is 60 g/g or more.

According to the above-mentioned method for producing a crosslinking polymer gel and the above-mentioned monomer composition, a crosslinking polymer gel that can be easily cut can be obtained.

Still another aspect of the present invention provides a method for producing crosslinking polymer particles, the method including coarsely crushing, drying, and pulverizing the crosslinking polymer gel obtained by the above-mentioned method for producing a crosslinking polymer gel to obtain crosslinking polymer particles.

Still another aspect of the present invention provides a crosslinking polymer gel having a structural unit derived from the above-mentioned monomer composition.

**Advantageous Effects of Invention**

According to one aspect of the present invention, a method for producing a crosslinking polymer gel that can be easily cut can be provided. According to another aspect of the present invention, a crosslinking polymer gel that can be easily cut can be provided. According to still another aspect of the present invention, a monomer composition capable of obtaining a crosslinking polymer gel that can be easily cut can be provided. According to still another aspect of the present invention, a method for producing crosslinking polymer particles using the above-mentioned crosslinking polymer gel can be provided.

**Brief Description of Drawings**

Fig. 1 is a cross-sectional view showing an example of an absorbent article.
Fig. 2 is views for explaining a test content of a cutting test.

**Description of Embodiments**

Hereinafter, embodiments of the present invention will be described in detail. However, the present invention is not limited to the following embodiments, and can be various modified and implemented within the scope of the gist thereof.

In the present specification, "acrylic" and "methacrylic" are collectively referred to as "(meth)acrylic". Similarly, "acrylate" and "methacrylate" are also referred to as "(meth)acrylate". "Polyethylene glycol" and "ethylene glycol" are collectively referred to as "(poly)ethylene glycol". The same applies to other expressions including "(poly)". In a numerical value range described in stages in the present specification, an upper limit value or a lower limit value of the numerical value range of a stage can be optionally combined with the upper limit value or the lower limit value of the numerical value range of another stage. In a numerical value range described in the present specification, the upper limit value or the lower limit value of the numerical value range may be replaced with the value shown in Examples. "Water-soluble" means that it exhibits a solubility in water of 5% by mass or more at 25°C. Materials exemplified in the present specification may be used alone, or may be used in combination of two or more. The content of each component in the composition means the total amount of a plurality of substances present in the composition in a case where the plurality of substances corresponding to each component are present in the composition, unless otherwise specified. "Physiological saline" refers to 0.9% by mass sodium chloride aqueous solution. "Content of a (meth)acrylic acid compound" and "total mass of a (meth)acrylic acid compound" mean the total amount of acrylic acid, an acrylic acid salt, methacrylic acid, and a methacrylic acid salt. "ppm" means ppm by mass.

A method for producing a crosslinking polymer gel (crosslinking polymer hydrogel) of the present embodiment includes a polymerization step of polymerizing a monomer composition containing at least one (meth)acrylic acid compound selected from the group consisting of (meth)acrylic acid and a salt thereof and benzaldehyde to obtain a crosslinking polymer gel. A monomer composition of the present embodiment is a monomer composition for obtaining a crosslinking polymer gel and contains at least one (meth)acrylic acid compound selected from the group consisting of (meth)acrylic acid and a salt thereof, and benzaldehyde. A centrifuge retention capacity (hereinafter may be referred to as "CRC") of crosslinking polymer particles obtained by coarsely crushing, drying, and pulverizing the crosslinking polymer gel obtained by the method for producing a crosslinking polymer gel and the monomer composition of the present embodiment is 60 g/g or more.

According to the method for producing a crosslinking polymer gel and the monomer composition of the present embodiment, a crosslinking polymer gel that can be easily cut can be obtained. In such a crosslinking polymer gel, the force required when cutting the gel can be reduced. The reason why the effect of capable of easily cutting the gel is obtained is not clear, but the inventor of the present invention speculates as follows. However, the reason is not limited to the following contents. That is, in a case where the CRC of the crosslinking polymer particles is 60 g/g or more, a polymerization rate is suitably controlled by the presence of benzaldehyde at the time of polymerization of the monomer composition containing the (meth)acrylic acid compound, and therefore, the force required when cutting the gel is reduced.

The crosslinking polymer gel of the present embodiment can be obtained by the method for producing a crosslinking polymer gel and the monomer composition of the present embodiment. The crosslinking polymer gel of the present embodiment has a structural unit derived from the monomer composition of the present embodiment.

The CRC of the crosslinking polymer particles is an abbreviation for Centrifuge Retention Capacity. The CRC of the crosslinking polymer particles can be measured by a method described in Examples to be described later with reference to an EDANA method (NWSP 241.0.R2 (15), page. 769-778), and specifically, the CRC can be obtained as a water absorption ratio by immersing a non-woven fabric bag in which 0.2 g of the crosslinking polymer particles in a dry state are accommodated in 1000 g of physiological saline for 30 minutes, and thereafter subjecting the bag to centrifugal separation using a centrifuge to perform draining of water. As the CRC of the crosslinking polymer particles, a measurement value at room temperature ($25°C \pm 1°C$) can be used.

The CRC of the crosslinking polymer particles is 60 g/g or more. The CRC of the crosslinking polymer particles may be 65 g/g or more, 70 g/g or more, 75 g/g or more, 78 g/g or more, 80 g/g or more, 82 g/g or more, 84 g/g or more, 85 g/g or more, or 86 g/g or more. The CRC of the crosslinking polymer particles may be 100 g/g or less, 95 g/g or less, 90 g/g or less, or 87 g/g or less. From these viewpoints, the CRC of the crosslinking polymer particles may be 60 to 100 g/g. The crosslinking polymer particles having the CRC of 60 g/g or more are crosslinking polymer particles obtained by coarsely crushing, drying, and pulverizing the crosslinking polymer gel, and may be crosslinking polymer particles obtained by performing classification after pulverization if necessary, or may be particles having the particle diameter of 180 to 850 $\mu$m. For example, the coarse crushing can be performed by using a coarse crusher having a discharge port having a circular hole with the diameter of 6.4 mm at the density of 40 holes/36.30 cm$^2$. For example, the drying can be performed at 180°C for 30 minutes. For example, the pulverization can be performed under the condition of a 1 mm trapezoidal hole of the screen. Examples of a shape of the crosslinking polymer particles include a crushed shape and a granular shape.

The crosslinking polymer gel and the crosslinking polymer particles of the present embodiment can contain a crosslinking polymer obtained by polymerizing the monomer composition of the present embodiment. The crosslinking polymer gel and the crosslinking polymer particles of the present embodiment may further contain another component such as a gel stabilizer, a metal chelating agent (ethylenediamine tetraacetate and a salt thereof, diethylenetriamine pentaacetate and a salt thereof (for example, diethylenetriamine pentasodium pentaacetate), and the like), and a flowability improver (lubricant). The other component may be disposed inside the crosslinking polymer, on the surface thereof, or both thereof.

The crosslinking polymer gel and the crosslinking polymer particles may contain inorganic particles disposed on the surface of the crosslinking polymer. For example, by mixing the crosslinking polymer and the inorganic particles, it is possible to dispose the inorganic particles on the surface of the crosslinking polymer. Examples of the inorganic particles include silica particles such as amorphous silica.

The monomer composition of the present embodiment may contain water, an organic solvent, or the like. The monomer composition of the present embodiment may be a monomer aqueous solution. Examples of a polymerization method of the monomer composition include an aqueous solution polymerization method, a bulk polymerization method, and a precipitation polymerization method. Among these, the aqueous solution polymerization method is preferable from the viewpoint of easily obtaining good water absorption performance (for example, CRC) and the viewpoint of facilitating control of the polymerization reaction. In the following, a case where the aqueous solution polymerization method is used will be described as an example of the polymerization method.

The monomer composition of the present embodiment contains at least one (meth)acrylic acid compound selected from the group consisting of (meth)acrylic acid and a salt thereof, and benzaldehyde. The monomer composition of the present embodiment may contain both (meth)acrylic acid and a salt of (meth)acrylic acid. Examples of the salt of (meth)acrylic acid include alkali metal salts (sodium salts, potassium salts, and the like), and alkaline earth metal salts (calcium salts and the like).

The monomer composition may contain an ethylenically unsaturated monomer different from the (meth)acrylic acid compound. As the ethylenically unsaturated monomer, a water-soluble ethylenically unsaturated monomer can be used. Examples of the ethylenically unsaturated monomer different from the (meth)acrylic acid compound include a carboxylic acid-based monomer such as $\alpha,\beta$-unsaturated carboxylic acid such as maleic acid, maleic acid anhydride, and fumaric acid, and salts thereof; a nonionic monomer such as (meth)acrylamide, N,N-dimethyl (meth)acrylamide, 2-hydroxyethyl (meth)acrylate, N-methylol (meth)acrylamide, and polyethylene glycol mono(meth)acrylate; an amino group-containing unsaturated monomer such as N,N-diethylaminoethyl (meth)acrylate, N,N-diethylaminopropyl (meth)acrylate, and diethylaminopropyl (meth)acrylamide, and quaternized products thereof; and a sulfonic acid-based monomer such as vinyl sulfonic acid, styrene sulfonic acid, 2-(meth)acrylamide-2-methylpropane sulfonic acid, and 2-(meth)acryloylethanesulfonic acid, and salts thereof.

In the ethylenically unsaturated monomer having an acid group (for example, (meth)acrylic acid), the acid group may be preliminarily neutralized with an alkaline neutralizing agent. Examples of the alkaline neutralizing agent include alkali metal salts such as sodium hydroxide, sodium carbonate, sodium hydrogen carbonate, potassium hydroxide, and potassium carbonate; and ammonia. The alkaline neutralizing agent may be used in the form of an aqueous solution to simplify the neutralization operation. Neutralization of the acid group may be performed before polymerization of the ethylenically unsaturated monomer that is a raw material, or may be performed during the polymerization or after the polymerization.

The degree of neutralization of the ethylenically unsaturated monomer with the alkaline neutralizing agent is preferably 10 to 100 mol%, 30 to 90 mol%, 40 to 85 mol%, or 50 to 80 mol% from the viewpoint of easily obtaining good water absorption performance (for example, CRC) by increasing an osmotic pressure, and the viewpoint of suppressing problems caused by the presence of the excess alkaline neutralizing agent. The "degree of neutralization" is a degree of neutralization with respect to all acid groups contained in the ethylenically unsaturated monomer.

The content of the (meth)acrylic acid compound is preferably in the following range on the basis of the total mass of the monomer composition. The content of the (meth)acrylic acid compound is preferably 10% by mass or more, 15% by mass or more, 20% by mass or more, 25% by mass or more, 30% by mass or more, or 35% by mass or more from the viewpoint of easily obtaining the gel that can be easily cut and the viewpoint of easily increasing the CRC. The content of the (meth)acrylic acid compound is preferably 60% by mass or less, 55% by mass or less, 50% by mass or less, less than 50% by mass, 45% by mass or less, or 40% by mass or less from the viewpoint of easily obtaining the gel that can be easily cut and the viewpoint of easily increasing the CRC. From these viewpoints, the content of the (meth)acrylic acid compound is preferably 10 to 60% by mass. In the crosslinking polymer particles of the present embodiment, the content of the structural unit derived from the (meth)acrylic acid compound is preferably in each of the above-mentioned ranges relating to the content of the (meth)acrylic acid compound on the basis of the total mass of the crosslinking polymer particles.

The content of the (meth)acrylic acid compound is preferably in the following range on the basis of the total amount of the monomer contained in the monomer composition and/or the total amount of the ethylenically unsaturated monomer contained in the monomer composition. The content of the (meth)acrylic acid compound is preferably 50 mol% or more, 70 mol% or more, 90 mol% or more, 95 mol% or more, 97 mol% or more, or 99 mol% or more. The monomer contained in the monomer composition and/or the ethylenically unsaturated monomer contained in the monomer composition may be in a form substantially composed of the (meth)acrylic acid compound (a form in which substantially 100 mol% of the monomer contained in the monomer composition and/or the ethylenically unsaturated monomer contained in the monomer composition is the (meth)acrylic acid compound).

Benzaldehyde may be contained in the (meth)acrylic acid compound, and may constitute the monomer composition independently of the (meth)acrylic acid compound.

The content of the benzaldehyde is more than 0 mmol with respect to 1 mol of the (meth)acrylic acid compound, and the following range is preferable. From the viewpoint of easily obtaining the gel that can be easily cut and the viewpoint of easily increasing the CRC, the content of the benzaldehyde is preferably 0.0001 mmol or more, 0.0003 mmol or more, 0.0005 mmol or more, 0.001 mmol or more, 0.0025 mmol or more, 0.003 mmol or more, more than 0.003 mmol, 0.005 mmol or more, 0.01 mmol or more, 0.012 mmol or more, 0.02 mmol or more, 0.03 mmol or more, 0.05 mmol or more, 0.06 mmol or more, 0.08 mmol or more, 0.1 mmol or more, more than 0.1 mmol, 0.2 mmol or more, 0.25 mmol or more, 0.3 mmol or more, more than 0.3 mmol, 0.32 mmol or more, 0.4 mmol or more, 0.45 mmol or more, 0.5 mmol or more, 0.6 mmol or more, or 0.65 mmol or more. From the viewpoint of easily obtaining the gel that can be easily cut, the viewpoint of easily increasing the CRC, and the viewpoint of easily suppressing remaining of an unreacted monomer, the content of the benzaldehyde is preferably 10 mmol or less, 7 mmol or less, 6 mmol or less, 5 mmol or less, 4 mmol or less, 3 mmol or less, 2.5 mmol or less, 2 mmol or less, 1.5 mmol or less, 1 mmol or less, less than 1 mmol, 0.8 mmol or less, or 0.7 mmol or less. From these viewpoints, the content of the benzaldehyde is preferably more than 0 mmol and 10 mmol or less.

The content of the benzaldehyde is more than 0 ppm on the basis of the total mass of the monomer composition, and the following range is preferable. From the viewpoint of easily obtaining the gel that can be easily cut and the viewpoint of easily increasing the CRC, the content of the benzaldehyde is preferably 0.02 ppm or more, 0.1 ppm or more, 0.15 ppm or more, 0.2 ppm or more, 0.5 ppm or more, 1.0 ppm or more, 1.5 ppm or more, 2.0 ppm or more, 5.0 ppm or more, 7.5 ppm or more, 12 pp or more, 12.5 ppm or more, 20 ppm or more, 25 ppm or more, 30 ppm or more, 35 ppm or more, 50 ppm or more, 60 ppm or more, 62.5 ppm or more, 75 ppm or more, 80 ppm or more, 90 ppm or more, 100 ppm or more, 125 ppm or more, 150 ppm or more, 175 ppm or more, 200 ppm or more, 250 ppm or more, 300 ppm or more, 350 ppm or more, or 360 ppm or more. From the viewpoint of easily obtaining the gel that can be easily cut and the viewpoint of easily increasing the CRC, the content of the benzaldehyde is preferably 3000 ppm or less, 2000 ppm or less, 1500 ppm or less, 1000 ppm or less, 800 ppm or less, 600 ppm or less, 500 ppm or less, 450 ppm or less, or 400 ppm or less. From these viewpoints, the content of the benzaldehyde is preferably more than 0 ppm and 3000 ppm or less.

The monomer composition may contain a polymerization initiator. The polymerization of the monomer contained in the monomer composition may be started by adding the polymerization initiator to the monomer composition, and performing heating, irradiating with light, or the like, if necessary. Examples of the polymerization initiator include a photopolymerization initiator and a radical polymerization initiator, and a water-soluble radical polymerization initiator is preferable. From the viewpoint of easily obtaining the gel that can be easily cut and the viewpoint of easily increasing the CRC, the polymerization initiator preferably contains at least one selected from the group consisting of azo-based compounds and peroxides.

Examples of the azo-based compound include 2,2'-azobis[2-(N-phenylamidino)propane]dihydrochloride, 2,2'-azobis {2-[N-(4-chlorophenyl)amidino]propane}dihydrochloride, 2,2'-azobis {2-[N-(4-hydroxyphenyl)amidino]propane} dihydrochloride, 2,2'-azobis[2-(N-benzylamidino)propane]dihydrochloride, 2,2'-azobis[2-(N-allylamidino)propane]dihydrochloride, 2,2'-azobis(2-amidinopropane)dihydrochloride, 2,2'-azobis {2-[N-(2-hydroxyethyl)amidino]propane}dihydrochloride, 2,2'-azobis[2-(5-methyl-2-imidazolin-2-yl)propane]dihydrochloride, 2,2'-azobis[2-(2-imidazolin-2-yl)propane] dihydrochloride, 2,2'-azobis[2-(4,5,6,7-tetrahydro-1H-1,3-diazepin-2-yl)propane]dihydrochloride, 2,2'-azobis[2-(5-hydroxy-3,4,5,6-tetrahydropyrimidin-2-yl)propane]dihydrochloride, 2,2'-azobis{2-[1-(2-hydroxyethyl)-2-imidazolin-2-yl]propane}dihydrochloride, 2,2'-azobis[2-(2-imidazolin-2-yl)propane]disulfate dihydrate, 2,2'-azobis[N-(2-carboxyethyl)-2-methylpropionamidine]tetrahydrate, and 2,2'-azobis[2-methyl-N-(2-hydroxyethyl)propionamide]. From the viewpoint of easily obtaining the gel that can be easily cut and the viewpoint of easily obtaining good water absorption performance (for example, CRC), the azo-based compound preferably contains at least one selected from the group consisting of 2,2'-azobis(2-methylpropionamide)dihydrochloride, 2,2'-azobis(2-amidinopropane)dihydrochloride, 2,2'-azobis{2-[1-(2-hydroxyethyl)-2-imidazolin-2-yl]propane}dihydrochloride, and 2,2'-azobis[N-(2-carboxyethyl)-2-methylpropionamidine]tetrahydrate.

Examples of the peroxide include persulfates such as potassium persulfate, ammonium persulfate, and sodium persulfate; and organic peroxides such as methyl ethyl ketone peroxide, methyl isobutyl ketone peroxide, di-t-butyl peroxide, t-butyl cumyl peroxide, t-butyl peroxyacetate, t-butyl peroxyisobutyrate, and t-butyl peroxypivalate. From the viewpoint of easily obtaining the gel that can be easily cut and the viewpoint of easily obtaining good water absorption performance (for example, CRC), the peroxide preferably contains at least one selected from the group consisting of potassium persulfate, ammonium persulfate, and sodium persulfate.

The content of the polymerization initiator is preferably in the following range with respect to 1 mol of the (meth)acrylic acid compound. From the viewpoint of easily obtaining the gel that can be easily cut, the viewpoint of easily increasing the CRC, and the viewpoint of shortening the polymerization reaction time, the content of the polymerization initiator is preferably 0.001 mmol or more, 0.003 mmol or more, 0.015 mmol or more, 0.03 mmol or more, 0.06 mmol or more, 0.08 mmol or more, or 0.1 mmol or more. From the viewpoint of easily obtaining the gel that can be easily cut, the viewpoint of easily increasing the CRC, and the viewpoint of easily avoiding a rapid polymerization reaction, the content of the polymerization initiator is preferably 5 mmol or less, 4 mmol or less, 2 mmol or less, 1 mmol or less, 0.5 mmol or less, 0.3 mmol or less, 0.25 mmol or less, 0.2 mmol or less, or 0.15 mmol or less. From these viewpoints, the content of the polymerization initiator is preferably 0.001 to 5 mmol.

The monomer composition may contain a reducing agent. Examples of the reducing agent include sodium sulfite, sodium hydrogen sulfite, ferrous sulfate, and L-ascorbic acid. The polymerization initiator and the reducing agent may be used in combination.

The monomer composition may contain an oxidant. Examples of the oxidant include hydrogen peroxide, sodium perborate, superphosphate and salts thereof, and potassium permanganate.

The monomer composition may contain an internal crosslinking agent. By using the internal crosslinking agent, the obtained crosslinking polymer can have a crosslinking structure as an internal crosslinking structure thereof by the internal crosslinking agent, in addition to a self-crosslinking structure by the polymerization reaction.

Examples of the internal crosslinking agent include compounds having two or more reactive functional groups (for example, polymerizable unsaturated groups). Examples of the internal crosslinking agent include di or tri (meth)acrylic acid esters of polyols such as (poly)ethylene glycol, (poly)propylene glycol, trimethylolpropane, glycerin, polyoxyethylene glycol, polyoxypropylene glycol, and (poly)glycerin; unsaturated polyesters obtained by reacting the above-mentioned polyol with unsaturated acid (such as maleic acid and fumaric acid); glycidyl group-containing compounds such as (poly)ethylene glycol diglycidyl ether, (poly)propylene glycol diglycidyl ether, (poly)glycerin diglycidyl ether, and glycidyl (meth)acrylate; bisacrylamides such as N,N'-methylenebis(meth)acrylamide; di or tri (meth)acrylic acid esters obtained by reacting a polyepoxide and (meth)acrylic acid; carbamyl di(meth)acrylate esters obtained by reacting a polyisocyanate (such as tolylene diisocyanate and hexamethylene diisocyanate) and hydroxyethyl (meth)acrylate; allylated starch; allylated cellulose; diallyl phthalate; N,N',N"-triallyl isocyanurate; and divinylbenzene; pentaerythritol; ethylenediamine; and polyethyleneimine. From the viewpoint of easily obtaining the gel that can be easily cut, the viewpoint of easily increasing the CRC, and the viewpoint of better reactivity at low temperature, the internal crosslinking agent preferably contains at least one selected from the group consisting of (poly)ethylene glycol diglycidyl ether, (poly)propylene glycol diglycidyl ether, and (poly)glycerin diglycidyl ether.

The content of the internal crosslinking agent is preferably in the following range with respect to 1 mol of the (meth)acrylic acid compound. From the viewpoint of easily obtaining the gel that can be easily cut and the viewpoint of easily obtaining good water absorption performance (for example, CRC), the content of the internal crosslinking agent is preferably 0.0005 mmol or more, 0.001 mmol or more, 0.002 mmol or more, 0.005 mmol or more, 0.01 mmol or more, 0.015 mmol or more, 0.02 mmol or more, or 0.025 mmol or more. From the viewpoint of easily obtaining the gel that can be easily cut and the viewpoint of easily obtaining good water absorption performance (for example, CRC), the content of the internal crosslinking agent is preferably 0.3 mmol or less, 0.25 mmol or less, 0.2 mmol or less, 0.18 mmol or less, less than 0.18 mmol, 0.17 mmol or less, 0.16 mmol or less, 0.15 mmol or less, 0.1 mmol or less, 0.06 mmol or less, less than 0.06 mmol, 0.05 mmol or less, less than 0.05 mmol, 0.04 mmol or less, or 0.03 mmol or less. From these viewpoints, the content of the internal crosslinking agent is preferably 0.0005 to 0.3 mmol.

If necessary, the monomer composition may contain an additive such as a chain transfer agent, a thickener, and an inorganic filler as a component different from each of the above-mentioned components. Examples of the chain transfer agent include thiols, thiolic acids, secondary alcohols, hypophosphorous acid, phosphorous acid, and acrolein. Examples of the thickener include carboxymethyl cellulose, hydroxyethyl cellulose, hydroxypropyl cellulose, methyl cellulose, polyethylene glycol, polyacrylic acid, neutralized products of polyacrylic acid, and polyacrylamide. Examples of the inorganic filler include metal oxides, ceramics, and viscous minerals.

Examples of a polymerization method of the aqueous solution polymerization include a static polymerization method in which polymerization is performed in a state where the monomer composition is not stirred (for example, a static state), and a stirring polymerization method in which polymerization is performed while stirring the monomer composition in a reaction apparatus. In the static polymerization method, when the polymerization is completed, a single block-shaped gel occupying substantially the same volume as the monomer composition present in a reaction container is obtained.

The form of polymerization may be batch, semi-continuous, continuous, or the like. For example, in a case where the static polymerization method is performed by continuous polymerization, a polymerization reaction can be performed while continuously supplying the monomer composition to a continuous polymerization apparatus to continuously obtain a gel.

The polymerization temperature varies depending on the used polymerization initiator, but the temperature is preferably 0°C to 130°C or 10°C to 110°C from the viewpoint of rapidly advancing the polymerization and shortening the polymerization time to enhance productivity, and removing polymerization heat to easily perform the reaction smoothly. The polymerization time is appropriately set according to the type and amount of the polymerization initiator used, the reaction temperature, and the like, but is preferably 1 to 200 minutes or 5 to 100 minutes.

In the method for producing crosslinking polymer particles of the present embodiment, the crosslinking polymer particles are obtained by coarsely crushing, drying, and pulverizing the crosslinking polymer gel obtained by the method for producing a crosslinking polymer gel of the present embodiment. That is, the method for producing crosslinking polymer particles of the present embodiment may include a gel production step of obtaining a crosslinking polymer gel by the method for producing a crosslinking polymer gel of the present embodiment, a gel coarse crushing step of coarsely crushing the crosslinking polymer gel to obtain a coarsely crushed product (coarsely crushed gel product), a drying step of drying the coarsely crushed product to obtain a dried product, and a dried product pulverization step of pulverizing the dried product.

As a coarse crusher in the gel coarse crushing step, a kneader (a pressure type kneader, a double arm type kneader, and the like), a meat chopper, a cutter mill, a Pharma Mill, or the like can be used, for example.

In the drying step, the dried product (gel-dried product) can be obtained by removing the liquid component (water and the like) in the coarsely crushed product by heat and/or air blowing. A drying method may be natural drying, drying by heat, spray drying, freeze drying, or the like. The drying temperature is 70°C to 250°C, for example.

Examples of a pulverizer in the pulverization step include a roller mill (roll mill), a stamp mill, a jet mill, a high-speed rotary pulverizer (a hammer mill, a pin mill, a rotor beater mill, and the like), and a container driving type mill (a rotary mill, a vibration mill, a planetary mill, and the like).

The method for producing crosslinking polymer particles of the present embodiment may include a classification step of classifying the pulverized product (pulverized product of the dried product) after the dried product pulverization step. In the classification step, the pulverized product can be divided into two or more particle groups having different particle size distributions. In the method for producing crosslinking polymer particles of the present embodiment, a plurality of times of the classification step may be performed by repeating the dried product pulverization step and the classification step, or the classification step may be performed after a subsequent crosslinking step to be described later. Examples of a classification method include screen classification and wind power classification. Examples of the screen classification include a vibrating sieve, a rotary shifter, a cylindrical stirring sieve, a blower sifter, and a Ro-tap shaker. The screen classification is a method of classifying particles on a screen into particles that pass through a mesh of the screen and particles that do not pass through the mesh by vibrating the screen. The wind power classification is a method of classifying particles using the flow of air.

A water-absorbent resin of the present embodiment can be obtained by subsequent crosslinking a polymer after the gel coarse crushing step. The subsequent crosslinking may be performed at any timing after the gel coarse crushing step, and may be performed at any timing of before or after the drying step, before or after the pulverization step, and before or after the classification step. The subsequent crosslinking may be surface crosslinking with respect to polymer particles. For example, the subsequent crosslinking can be performed by reacting a crosslinking agent (for example, a surface crosslinking agent) with the polymer. By performing subsequent crosslinking using the crosslinking agent, the crosslinking density of the polymer (for example, the crosslinking density in the vicinity of the surface of the polymer particles) is increased, and therefore water absorption performance (a CRC, a water absorption amount under a load, a water absorption rate, and the like) of the polymer is easily enhanced.

Examples of the crosslinking agent include a compound containing two or more functional groups (reactive functional groups) having reactivity with a functional group derived from the ethylenically unsaturated monomer. Examples of the crosslinking agent include polyols such as ethylene glycol, propylene glycol, 1,4-butanediol, trimethylolpropane, glycerin, polyoxyethylene glycol, polyoxypropylene glycol, and polyglycerin; polyglycidyl compounds such as (poly)ethylene glycol diglycidyl ether, (poly)glycerin diglycidyl ether, (poly)glycerin triglycidyl ether, (poly)propylene glycol polyglycidyl ether, and (poly)glycerol polyglycidyl ether; haloepoxy compounds such as epichlorohydrin, epibromohydrin, and $\alpha$-methyl epichlorohydrin; compounds, which have two or more reactive functional groups, such as isocyanate compounds (2,4-tolylene diisocyanate, hexamethylene diisocyanate, and the like); oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, and 3-butyl-3-oxetane ethanol; oxazoline compounds such as 1,2-ethylenebisoxazoline; carbonate compounds such as ethylene carbonate; and hydroxyalkylamide compounds such as bis[N,N-di($\beta$-hydroxyethyl)]adipamide.

The water-absorbent resin of the present embodiment may contain, on the surface thereof, inorganic particles of a gel stabilizer, a metal chelating agent (ethylenediamine tetraacetate and a salt thereof, diethylenetriamine pentaacetate and a salt thereof (for example, diethylenetriamine pentasodium pentaacetate), and the like), a flowability improver (lubricant), or the like. For example, by mixing the polymer after the subsequent crosslinking and the inorganic particles, it is possible to dispose the inorganic particles on the surface of the polymer. Examples of the inorganic particles include silica particles such as amorphous silica.

The water-absorbent resin of the present embodiment can retain water and can absorb a body fluid such as urine, sweat, and blood (for example, menstrual blood). The water-absorbent resin of the present embodiment can be used as a constituent component of an absorber. For example, the present embodiment can be used in fields of sanitary materials such as disposable diapers and hygiene products; agricultural and horticultural materials such as water retention agents and soil improvement agents; and industrial materials such as waterproofing agents and condensation prevention agents.

An absorber of the present embodiment contains the water-absorbent resin (for example, water-absorbent resin particles) of the present embodiment. The absorber of the present embodiment may contain a fibrous substance, for example, is a mixture containing the water-absorbent resin and the fibrous substance. For example, the structure of the absorber may be a structure in which the water-absorbent resin and the fibrous substance are uniformly mixed, may be a structure in which the water-absorbent resin is sandwiched between the fibrous substances formed in the form of a sheet or a layer, or may be other structures.

Examples of the fibrous substance include finely pulverized wood pulp; cotton; cotton linter; rayon; cellulosic fibers such as cellulose acetate; synthetic fibers such as polyamide, polyester, and polyolefin; and a mixture of these fibers. As the fibrous substance, hydrophilic fibers can be used.

In order to enhance the morphological retention before and during use of the absorber, the fibers may be adhered to each other by adding an adhesive binder to the fibrous substance. Examples of the adhesive binder include thermal bonding synthetic fibers, hot melt adhesives, and adhesive emulsions.

Examples of the thermal bonding synthetic fiber include a total fusion type binder such as polyethylene, polypropylene, and an ethylenepropylene copolymer; and a non-total fusion type binder made of a side-by-side or core-sheath structure of polypropylene and polyethylene. In the above-mentioned non-total fusion type binder, only the polyethylene portion can be thermal-bonded.

Examples of the hot melt adhesive include a mixture of a base polymer such as ethylene-vinyl acetate copolymer, styrene-isoprene-styrene block copolymer, styrene-butadiene-styrene block copolymer, styrene-ethylene-butylene-styrene block copolymer, styrene-ethylenepropylene-styrene block copolymer, and amorphous polypropylene with a tackifier, a plasticizer, an antioxidant, or the like.

Examples of the adhesive emulsion include a polymerization product of at least one monomer selected from the group consisting of methyl methacrylate, styrene, acrylonitrile, 2-ethylhexyl acrylate, butyl acrylate, butadiene, ethylene, and vinyl acetate.

The absorber of the present embodiment may contain an inorganic powder (for example, amorphous silica), a deodorant, an antibacterial agent, a dye, a pigment, a fragrance, a sticking agent, or the like. In a case where the water-absorbent resin contains inorganic particles, the absorber may contain an inorganic powder in addition to the inorganic particles of the water-absorbent resin.

The shape of the absorber of the present embodiment may be a sheet shape, for example. The thickness of the absorber (for example, thickness of the sheet shaped absorber) may be 0.1 to 20 mm or 0.3 to 15 mm.

The content of the water-absorbent resin in the absorber may be 2% to 95% by mass, 10% to 80% by mass, or 20% to 60% by mass with respect to a total of the water-absorbent resin and the fibrous substance from the viewpoint of easily obtaining sufficient absorption characteristics.

The content of the water-absorbent resin in the absorber is preferably 100 to 1000 g, 150 to 800 g, or 200 to 700 g per 1 $m^2$ of the absorber from the viewpoint of easily obtaining sufficient absorption characteristics. The content of the fibrous substance in the absorber is preferably 50 to 800 g, 100 to 600 g, or 150 to 500 g per 1 $m^2$ of the absorber from the viewpoint of easily obtaining sufficient absorption characteristics.

An absorbent article of the present embodiment includes the absorber of the present embodiment. Examples of other constituent members of the absorbent article of the present embodiment include a core wrap that retains the shape of the absorber and prevents falloff or flow of the constituent member of the absorber; a liquid permeable sheet disposed on the outermost part at a side where a liquid to be absorbed enters; and a liquid impermeable sheet disposed on the outermost part at the opposite side to the side where the liquid to be absorbed enters. Examples of the absorbent article include diapers (for example, disposable diapers), toilet training pants, incontinence pads, sanitary materials (sanitary napkins, tampons, and the like), sweat pads, pet sheets, portal toilet members, and animal excrement treatment materials.

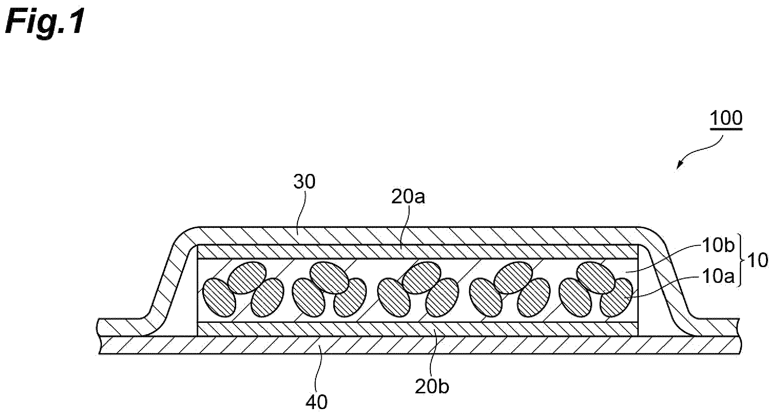

Fig. 1 is a cross-sectional view showing an example of an absorbent article. An absorbent article 100 shown in Fig. 1 includes an absorber 10, core wraps 20a and 20b, a liquid permeable sheet 30, and a liquid impermeable sheet 40. In the absorbent article 100, the liquid impermeable sheet 40, the core wrap 20b, the absorber 10, the core wrap 20a, and the liquid permeable sheet 30 are laminated in this order. In Fig. 1, there is a portion shown so that there is a gap between the members, but the members may be in close contact with each other without the gap.

The absorber 10 has a water-absorbent resin particle 10a containing the water-absorbent resin of the present embodiment, and a fiber layer 10b containing a fibrous substance. The water-absorbent resin particles 10a are dispersed in the fiber layer 10b.

The core wrap 20a is disposed on one surface side of the absorber 10 (upper side of the absorber 10 in Fig. 1) in a state of being in contact with the absorber 10. The core wrap 20b is disposed on the other surface side of the absorber 10 (lower side of the absorber 10 in Fig. 1) in a state of being in contact with the absorber 10. The absorber 10 is disposed between the core wrap 20a and the core wrap 20b. Examples of the core wraps 20a and 20b include tissues, non-woven fabrics, woven fabrics, synthetic resin films having liquid permeation holes, and net-like sheets having a mesh. The core wrap 20a and the core wrap 20b each have a main surface having the same size as that of the absorber 10, for example.

The liquid permeable sheet 30 is disposed on the outermost part at the side where the liquid to be absorbed enters. The liquid permeable sheet 30 is disposed on the core wrap 20a in a state of being in contact with the core wrap 20a. Examples of the liquid permeable sheet 30 include a non-woven fabric made of a synthetic resin such as polyethylene, polypropylene, polyester, and polyamide, and a porous sheet. The liquid impermeable sheet 40 is disposed on the outermost part at the opposite side to the liquid permeable sheet 30 in the absorbent article 100. The liquid impermeable sheet 40 is disposed on a lower side of the core wrap 20b in a state of being in contact with the core wrap 20b. Examples of the liquid impermeable sheet 40 include a sheet made of a synthetic resin such as polyethylene, polypropylene, and polyvinyl chloride, and a sheet made of a composite material of these synthetic resins and a non-woven fabric. The liquid permeable sheet 30 and the liquid impermeable sheet 40 have a main surface wider than the main surface of the absorber 10, and outer edges of the liquid permeable sheet 30 and the liquid impermeable sheet 40 are present around the absorber 10 and the core wraps 20a and 20b.

The magnitude relationship between the absorber 10, the core wraps 20a and 20b, the liquid permeable sheet 30, and the liquid impermeable sheet 40 is not particularly limited, and is appropriately adjusted according to the use of the absorbent article or the like. In addition, the method of retaining the shape of the absorber 10 using the core wraps 20a and 20b is not particularly limited, and as shown in Fig. 1, the absorber may be wrapped by a plurality of core wraps, and the absorber may be wrapped by one core wrap.

The absorber may be adhered to a top sheet. In a case where the absorber is sandwiched or covered by the core wrap, it is preferable that at least the core wrap and the top sheet are adhered to each other, and it is more preferable that the core wrap and the top sheet are adhered to each other and the core wrap and the absorber are adhered to each other. Examples of a method of adhering the absorber include a method of adhering by applying a hot melt adhesive to the top sheet at predetermined intervals in a striped shape, a spiral shape, or the like in a width direction; and a method of adhering using a water-soluble binder such as starch, carboxymethyl cellulose, polyvinyl alcohol, polyvinylpyrrolidone, and other water-soluble polymers. In addition, in a case where the absorber contains thermal bonding synthetic fibers, a method of adhering by thermal bonding of the thermal bonding synthetic fibers may be adopted.

According to the present embodiment, it is possible to provide a liquid absorbing method using the water-absorbent resin, the absorber, or the absorbent article of the present embodiment. The liquid absorbing method of the present embodiment includes a step of bringing the liquid to be absorbed into contact with the water-absorbent resin, the absorber, or the absorbent article of the present embodiment.

According to the present embodiment, a method for producing an absorber using the above-mentioned water-absorbent resin can be provided. The method for producing an absorber of the present embodiment includes a water-absorbent resin producing step for obtaining the above-mentioned water-absorbent resin. The method for producing an absorber of the present embodiment may include a step of mixing the water-absorbent resin and the fibrous substance after the water-absorbent resin producing step. According to the present embodiment, it is possible to provide a method for producing an absorbent article using the absorber obtained by the above-mentioned method for producing an absorber. The method for producing an absorbent article of the present embodiment includes an absorber producing step of obtaining an absorber by the above-mentioned method for producing an absorber. The method for producing an absorbent article of the present embodiment may include a step of obtaining an absorbent article by using the absorber and other constituent member for an absorbent article after the absorber producing step, and in this step, for example, an absorbent article is obtained by laminating the absorber and other constituent member for an absorbent article with each other.

According to the present embodiment, it is possible to provide use of the water-absorbent resin, the absorber, and the absorbent article to absorption of a liquid. According to the present embodiment, it is possible to provide use of the crosslinking polymer gel to adjustment of the force required when cutting the crosslinking polymer gel. According to the present embodiment, it is possible to provide a method for adjusting the force required when cutting the crosslinking polymer gel which is a method for adjusting the force required when cutting the crosslinking polymer gel based on the amount of benzaldehyde in the monomer composition for obtaining the crosslinking polymer gel.

**Examples**

Hereinafter, contents of the present invention will be described in further detail using examples and comparative examples, but the present invention is not limited to the following examples.

<Production of gel>

(Example 1)

A stirring bar (diameter: 8 mm, length: 40 mm, without a ring) was put at a central part in a stainless steel vat having a fluororesin-coated inner surface (outer dimensions of an opening: 210 mm $\times$ 170 mm, inner dimensions of a bottom surface: 170 $\times$ 130 mm, height: 30 mm). After adding 340.0 g of a solution of partially neutralized sodium acrylate (monomer used for polymerization, monomer concentration: 45% by mass, neutralization rate of sodium acrylate: 75 mol%), 0.0077 g of ethylene glycol diglycidyl ether (internal crosslinking agent, 0.044 mmol), 0.374 mg of benzaldehyde (0.0035 mmol), and 59.0 g of ion-exchanged water, the stirring bar was rotated for an uniform mixing to obtain a mixture (concentration of the solution of partially neutralized sodium acrylate: 38% by mass). Thereafter, the inside of the stainless steel vat was sealed by sealing the upper part of the stainless steel vat with a polyethylene film. After adjusting the temperature of the above-mentioned mixture in the stainless steel vat to 25°C, the mixture was subjected to nitrogen substitution to adjust the dissolved oxygen amount to 0.1 ppm or less. Subsequently, under stirring at 300 rpm, 3.09 g of a 2% by mass potassium persulfate aqueous solution (potassium persulfate: 0.229 mmol) and 0.65 g of a 0.5% by mass L-ascorbic acid aqueous solution were added dropwise in this order to prepare a monomer aqueous solution. Polymerization started 2 minutes after the dropwise addition of the 0.5% by mass L-ascorbic acid aqueous solution. After 22 minutes from the start of polymerization, the obtained product still being put in the container was immersed in a water bath at 75°C and aged for 20 minutes to obtain a gel (post-polymerization gel). The thickness of the gel was 1.3 cm. The same operation was performed to obtain two gels of a gel A for producing crosslinking polymer particles and a gel B for performing a cutting test.

(Example 2)

A gel was obtained by performing the same operation as in Example 1 except that the use amount of benzaldehyde was changed to 1.245 mg (0.0117 mmol).

(Example 3)

A gel was obtained by performing the same operation as in Example 1 except that the use amount of benzaldehyde was changed to 2.490 mg (0.0234 mmol).

(Example 4)

A gel was obtained by performing the same operation as in Example 1 except that the use amount of benzaldehyde was changed to 87.15 mg (0.819 mmol).

(Example 5)

A gel was obtained by performing the same operation as in Example 1 except that the use amount of benzaldehyde was changed to 124.5 mg (1.173 mmol).

(Example 6)

A gel was obtained by performing the same operation as in Example 1 except that the use amount of ethylene glycol diglycidyl ether was changed to 0.0154 g (0.088 mmol) and the use amount of benzaldehyde was changed to 1.245 mg (0.0117 mmol).

(Example 7)

A stirring bar (diameter: 8 mm, length: 40 mm, without a ring) was put in a central part in a stainless steel vat having a fluororesin-coated inner surface (outer dimensions of an opening: 210 mm × 170 mm, inner dimensions of a bottom surface: 170 × 130 mm, height: 30 mm). After adding 340.0 g of a solution of partially neutralized sodium acrylate (monomer used for polymerization, monomer concentration: 45% by mass, neutralization rate of sodium acrylate: 75 mol%), 0.0541 g of ethylene glycol diglycidyl ether (internal crosslinking agent, 0.311 mmol), 1.245 mg of benzaldehyde (0.0117 mmol), and 59.0 g of ion-exchanged water, the stirring bar was rotated for an uniform mixing to obtain a mixture (concentration of the solution of partially neutralized sodium acrylate: 38% by mass). Thereafter, the inside of the stainless steel vat was sealed by sealing the upper part of the stainless steel vat with a polyethylene film. After adjusting the temperature of the above-mentioned mixture in the stainless steel vat to 25°C, the mixture was subjected to nitrogen substitution to adjust the dissolved oxygen amount to 0.1 ppm or less. Subsequently, under stirring at 300 rpm, 3.09 g of a 2% by mass V-50 aqueous solution (2,2'-azobis(2-amidinopropane)dihydrochloride, 0.228 mmol, manufactured by Wako Pure Chemical Industries, Ltd.), 0.65 g of a 0.5% by mass L-ascorbic acid aqueous solution, and 0.72 g of a 0.35% by mass hydrogen peroxide solution were added dropwise in this order to prepare a monomer aqueous solution. Polymerization started immediately after the dropwise addition of the 0.35% by mass hydrogen peroxide solution. After 12 minutes from the start of polymerization, the obtained product still being put in the container was immersed in a water bath at 75°C and aged for 20 minutes to obtain a gel (post-polymerization gel). The thickness of the gel was 1.3 cm. The same operation was performed to obtain two gels of a gel A for producing crosslinking polymer particles and a gel B for performing a cutting test.

(Comparative Example 1)

A gel was obtained by performing the same operation as in Example 1 except that benzaldehyde was not used.

(Comparative Example 2)

A gel was obtained by performing the same operation as in Example 1 except that the use amount of ethylene glycol diglycidyl ether was changed to 0.0154 g (0.088 mmol) and benzaldehyde was not added.

(Comparative Example 3)

A gel was obtained by performing the same operation as in Example 7 except that benzaldehyde was not used.

<Production of crosslinking polymer particles>

The gel A of each of Examples and Comparative Examples was treated as follows to obtain crosslinking polymer particles of each thereof.

Using scissors, eight rectangular parallelepiped gels having the width of 2 cm, the length of 13 cm, and the thickness of 1.3 cm were obtained from the gel A. The rectangular parallelepiped gels were sequentially injected in a meat chopper (model number: 12VR-750SDX, manufactured by Alpha Royal Co., Ltd.). The diameter of a hole (circular) of a plate located at a discharge port of the meat chopper was 6.4 mm, and the density of the holes was 40 holes/36.30 cm$^2$. Coarse crushing was performed until a coarsely crushed product (coarsely crushed gel) did not come out from the plate of the meat chopper.

The coarsely crushed product was spread on a net, and thereafter dried in a hot air dryer (model number: FV-320, manufactured by ADVANTEC) set at 180°C for 30 minutes to obtain a dried product.

Using a pulverizer (Retsch, Rotor Beater Mill, SR 300), the dried product was pulverized under the condition of a 1 mm trapezoidal hole of a screen.

By classifying particles after the pulverization with a sieve having the opening of 850 $\mu$m and a sieve having the opening of 180 $\mu$m, crosslinking polymer particles that had passed through the sieve of 850 $\mu$m and remained on the sieve of 180 $\mu$m were recovered.

<CRC measurement>

The CRC of the crosslinking polymer particles was measured by the following procedure with reference to the EDANA method (NWSP 241.0.R2 (15), page. 769-778).

A non-woven fabric having the size of 60 mm × 170 mm (product name: Heat Pac MWA-18, manufactured by NIPPON PAPER PAPYLIA CO., LTD.) was folded in half in a longitudinal direction to adjust the size to 60 mm × 85 mm. Both sides of the non-woven fabric extending in the longitudinal direction were pressure-bonded to each other with a heat seal to produce a non-woven fabric bag of 60 mm × 85 mm (where the pressure-bonded portions having the width of 5 mm were formed on both sides along the longitudinal direction). 0.2 g of the above-mentioned crosslinking polymer particles was accommodated inside the non-woven fabric bag. Thereafter, the remaining one side extending in a lateral direction was pressure-bonded with a heat seal to close the non-woven fabric bag.

In a state where the non-woven fabric bag was not folded, the non-woven fabric bag was floated on 1000 g of physiological saline accommodated in the vat made of stainless steel (240 mm × 320 mm × 45 mm) to completely moisten the entire non-woven fabric bag. After one minute from the injection of the non-woven fabric bag in physiological saline, the non-woven fabric bag was immersed in the physiological saline with a spatula to obtain a non-woven fabric bag in which the gel was accommodated.

After 30 minutes from the injection of the non-woven fabric bag in physiological saline (a total of 1 minute of the floating time and 29 minutes of the immersion time), the non-woven fabric bag was taken out from the physiological saline. In addition, the non-woven fabric bag was put in a centrifuge (manufactured by KOKUSAN Co., Ltd., model number: H-122). After the centrifugal force in the centrifuge reached 250 G, dehydration of the non-woven fabric bag was performed for 3 minutes. After the dehydration, the mass $M_a$ of the non-woven fabric bag containing the mass of the gel was weighed. The non-woven fabric bag was subjected to the same operation as the above-mentioned operation without accommodating the crosslinking polymer particles to measure the mass $M_b$ of the non-woven fabric bag. The CRC was calculated based on the following formula. $M_c$ is the mass of 0.2 g of the crosslinking polymer particles used in the measurement. The results are shown in Table 1.

$$\text{CRC [g/g]} = \{(M_a - M_b) - M_c\}/M_c$$

<Cutting test>

The gel B of each of Examples and Comparative Examples was treated as follows to perform a cutting test on each thereof.

Using scissors, six rectangular parallelepiped test pieces having the width of 2 cm, the length of 13 cm, and the thickness of 1.3 cm were obtained from the gel B. Because a void was likely to be formed in a region in which the stirring bar was present (near the center of the gel) in the gel B, a test piece was obtained from the region in which the void was not formed.

The cutting test was performed using EZtest (product name: EZtest, model number: EZ-SX, manufactured by Shimadzu Corporation). A blade used for cutting the gel (long cutting blade, catalog description name: 45°Cut edge surface t3mm) was installed on a load cell having the capacity of 500 N (where measurement upper limit was set to 450 N) with the tip end of the blade facing downward in a vertical direction to assemble a jig. The blade has a cutting edge portion (length in a tip end direction: 3 mm, a cutting edge portion narrowed toward the tip end direction and having a sharp tip end), and a plate shaped support portion that supports the cutting edge portion. The length of the cutting blade including the cutting edge portion in the longitudinal direction is 7 cm. The cutting edge portion is formed on the entire side of the support portion, and the width of a base end of the cutting edge portion and the support portion is 3 mm. The cutting edge portion has a first blade surface that is inclined from one surface of the support portion to the tip end direction, and a second blade surface that is inclined from the other surface of the support portion to the tip end direction. The first blade surface and the second blade surface are inclined by 22.5° in the tip end direction, and the angle (internal angle) between the first blade surface and the second blade surface is 45°. The shape of the cross section perpendicular to the longitudinal direction in the cutting edge portion is an isosceles triangle.

The test piece was cut according to the following procedure by operating the blade attached to the EZtest using Shimadzu Autograph Software Trapezium X (manufactured by Shimadzu Corporation). Cutting was performed at room temperature (25°C ± 1°C).

The test piece was placed on a measurement table in a state where the 2 cm $\times$ 13 cm surface of the test piece was in contact with the measurement table and the longitudinal direction of the test piece was orthogonal to the longitudinal direction of the blade. The blade was manually lowered and stopped when the load cell sensed the load of 0.01 N. Thereafter, the blade was raised by 0.01 mm, and the position thereof was set as a measurement start location.

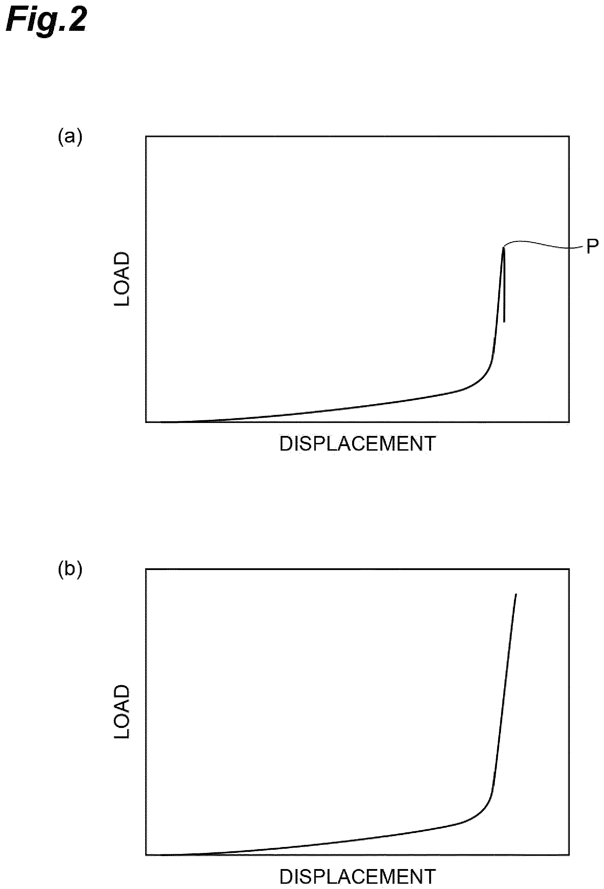

The blade (set to move automatically by the programming function of Trapezium X) was pressed into the surface of the test piece from the measurement start location at the rate of 20 mm/min to measure the load applied to the jig when the gel was cut. Fig. 2 is views for explaining the test contents of the cutting test, and is a load displacement curve showing dependency of the load applied to the jig on the displacement of the jig. The load increases as the blade is pressed into the gel, and when the gel is cut, the load rises sharply and thereafter drops sharply so that the peak is observed (refer to Fig. 2(a)), and the load of this peak top P was acquired. In a case where the test piece was not cut, the load reached the measurement upper limit of 450 N (refer to Fig. 2(b)).

The load (load at the peak top) when cutting of each of the six test pieces was measured, and the average value of the loads (cutting force) was calculated. Table 1 shows the results of the cutting test (average value of the loads). In Examples and Comparative Examples, 450 N was not reached for all the loads (loads of the six peak tops).

[Table 1]

| | Benzaldehyde [ppm] (vs (meth)acrylic acid compound amount) | CRC [g/g] | Cutting test [N] |
|---|---|---|---|
| Example 1 | 3 | 75 | 412 |
| Example 2 | 10 | 77 | 410 |
| Example 3 | 20 | 83 | 400 |
| Example 4 | 700 | 85 | 397 |
| Example 5 | 1000 | 86 | 355 |
| Example 6 | 10 | 73 | 414 |
| Example 7 | 10 | 75 | 379 |
| Comparative Example 1 | 0 | 74 | 422 |
| Comparative Example 2 | 0 | 68 | 435 |
| Comparative Example 3 | 0 | 74 | 429 |

According to Table 1, it is confirmed that, in a case where the CRC of the crosslinking polymer particles is 60 g/g or more, using the monomer composition containing the (meth)acrylic acid compound and benzaldehyde is effective in obtaining the crosslinking polymer gel that can be easily cut.

**Reference Signs List**

10: absorber, 10a: water-absorbent resin particle, 10b: fiber layer, 20a, 20b: core wrap, 30: liquid permeable sheet, 40: liquid impermeable sheet, 100: absorbent article.

**Claims**

1. A method for producing a crosslinking polymer gel, the method comprising:

   polymerizing a monomer composition containing at least one (meth)acrylic acid compound selected from the group consisting of (meth)acrylic acid and a salt thereof and benzaldehyde to obtain a crosslinking polymer gel, wherein a centrifuge retention capacity of crosslinking polymer particles obtained by coarsely crushing, drying, and pulverizing the crosslinking polymer gel is 60 g/g or more.

2. The method for producing a crosslinking polymer gel according to claim 1, wherein a content of the benzaldehyde is 0.1 mmol or more with respect to 1 mol of the (meth)acrylic acid compound.

3. A method for producing crosslinking polymer particles, the method comprising: coarsely crushing, drying, and pulverizing the crosslinking polymer gel obtained by the method for producing a crosslinking polymer gel according to claim 1 or 2 to obtain crosslinking polymer particles.

4. A monomer composition for obtaining a crosslinking polymer gel, the monomer composition comprising:

at least one (meth)acrylic acid compound selected from the group consisting of (meth)acrylic acid and a salt thereof; and
benzaldehyde,
wherein a centrifuge retention capacity of crosslinking polymer particles obtained by coarsely crushing, drying, and pulverizing the crosslinking polymer gel is 60 g/g or more.

5. The monomer composition according to claim 4, wherein a content of the benzaldehyde is 0.1 mmol or more with respect to 1 mol of the (meth)acrylic acid compound.

6. A crosslinking polymer gel comprising a structural unit derived from the monomer composition according to claim 4 or 5.

EP 3 995 515 A1

**Fig.1**

# *Fig.2*

(a)

(b)

## INTERNATIONAL SEARCH REPORT

| International application No. |
|---|
| PCT/JP2020/025841 |

**A. CLASSIFICATION OF SUBJECT MATTER**
Int.Cl. C08F2/38(2006.01)i
FI: C08F2/38

According to International Patent Classification (IPC) or to both national classification and IPC

**B. FIELDS SEARCHED**

Minimum documentation searched (classification system followed by classification symbols)
Int.Cl. C08F2/38

Documentation searched other than minimum documentation to the extent that such documents are included in the fields searched
    Published examined utility model applications of Japan    1922-1996
    Published unexamined utility model applications of Japan    1971-2020
    Registered utility model specifications of Japan    1996-2020
    Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2010/140530 A1 (NIPPON SHOKUBAI CO., LTD.) 09.12.2010 (2010-12-09), claim 11, paragraphs [0129], [0140], examples, etc. | 1, 3-4, 6 |
| A | JP 2009-173942 A (NIPPON SHOKUBAI CO., LTD.) 06.08.2009 (2009-08-06) | 1-6 |
| A | JP 2013-100529 A (NIPPON SHOKUBAI CO., LTD.) 23.05.2013 (2013-05-23) | 1-6 |
| A | JP 2014-515430 A (BASF SE) 30.06.2014 (2014-06-30) | 1-6 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.09.2020 | 24.09.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

| International application No. |
| --- |
| PCT/JP2020/025841 |

```
WO 2010/140530 A1  09.12.2010    US 2012/0071620 A1
                                 claim 11, paragraphs [0131],
                                 [0142], examples, etc.
                                 EP 2439186 A1
                                 SG 176607 A
                                 CN 102448923 A
                                 BR PI1011858 A
                                 TW 201043597 A

JP 2009-173942 A   06.08.2009    US 6444744 B1
                                 EP 942014 A2
                                 BR 9900992 A
                                 SG 75923 A
                                 TW 570933 B
                                 CN 1234407 A
                                 KR 10-1999-0077746 A
                                 MY 129553 A

JP 2013-100529 A   23.05.2013    US 2002/0120085 A1
                                 EP 1302485 A1
                                 BR 106878 A
                                 CN 1383432 A
                                 ZA 200200723 A

JP 2014-515430 A   30.06.2014    EP 2714755 A1
                                 CN 103562240 A
```

Form PCT/ISA/210 (patent family annex) (January 2015)

**REFERENCES CITED IN THE DESCRIPTION**

**Patent documents cited in the description**

- JP H06345819 A